# EUROPEAN PATENT APPLICATION

(11) **EP 2 955 493 A1**
(43) Date of publication of application: **16.12.2015**
(21) Application number: 15171804.6
(22) Date of filing: 12.06.2015
(51) Int. Cl.: G01H 3/00, E21B 47/14, F16L 55/26, G01N 29/00, G01V 1/00, G01S 15/88

(54) **SYSTEM FOR MONITORING AND/OR SURVEYING CONDUITS**

(30) Priority: 13.06.2014 GB 201410559
(71) Applicant: Reece Innovation Centre Limited, Newcastle Upon Tyne, Tyne and Wear NE6 3QS (GB)
(72) Inventor: MARTIN, James, Whitley Bay, Tyne and Wear NE26 3PG (GB); WILKINSON, Alexander, Newcastle, Tyne and Wear NE2 1HP (GB); KIANI, Saeed, Newcastle upon Tyne NE3 5ED (GB); TAMADONI, Reza, Durham, Tyne and Wear DH1 1AN (GB); GRIFFITHS, Luke, Gateshead, Tyne and Wear NE9 5NQ (GB)
(74) Representative: Bryers LLP

(57) **Abstract**

There is provided a system for monitoring and/or surveying a conduit, comprising an acoustic source for emitting a signal to propagate along the conduit, and an acoustic detector for receiving reflected signals.

## Description

The present invention relates generally to conduits and particularly to a system and a method for monitoring and/or surveying conduits.

The term "conduit" includes, for example culverts, pipes, sewers, drains and tunnels.

No adequate means of monitoring the state of sewers exists. Most known sewer monitoring systems relate to monitoring the level of liquid waste in the sewer, and particularly in rain water storm drains. While the build-up of fluid in a sewer or drain is an indication of a potential blockage, it will not help to locate the actual blockage accurately. A number of monitoring systems also measure the rate of flow of fluid in the drain, which is again an indirect, but useful means of monitoring the state of the sewer or drain.

Similarly, military patrols need to make painstaking investigations of conduits that traverse their route. These surveys are very time consuming and place the static patrol at risk from attack. No rapid surveying method is known for surveying conduits with a view to identifying potential presence of explosives and improvised explosive devices.

The present invention seeks to provide a means for surveying and/or monitoring conduits.

According to an aspect of the present invention there is provided a system for monitoring and/or surveying a conduit, comprising an acoustic source for emitting a signal to propagate along the conduit, and an acoustic detector for receiving reflected signals.

The present invention provides a means whereby conduits can be monitored and the presence of, and/or location of, potential partial and total blockages; and/or clandestine deposits can be identified.

Culverts, pipes, sewers, drains and tunnels, hereafter referred to as conduits, that pass beneath a road, track or railway line (route of transport) can be packed with explosives (mines or improvised explosive devices) with which the route can be disrupted, materiel damaged and destroyed, and personnel either killed or injured. A means of rapidly surveying the status of conduits to detect partial or total blockages enables the identification of high risk obstructions. Further, more detailed investigations can then be made to identify the cause of the obstruction, or to bypass the obstruction.

Culverts, pipes, tunnels, drains and especially sewers, can become either totally or partially blocked due to cave-ins, disruption by tree roots or simply the build-up of solid components of the sewerage, including fat-bergs. When an obstruction occurs, sewerage may leak into the surrounding area creating a health risk and requiring significant remedial action. The location of a partial or total blockage by using the principles of the present invention may remove the requirement for personnel to go into the sewer and manually locate the blockage, identify its nature and plan remedial action.

In some embodiments a plurality of sources and/or a plurality of detectors may be provided.

The or at least one of the detectors may be a microphone. Alternatively or additionally the or at least one of the detectors may be a hydrophone. Alternatively or additionally the or at least one of the detectors may be an accelerometer. Alternatively or additionally the or at leat one of the detectors may be a vibration sensor.

The system may further comprise a chemical detector, for example a detector for detecting volatile organic compounds such as methane.

The acoustic source and the acoustic detector may be co-located; for example the detector may be slung or otherwise mounted adjacent (for example beneath) the source.

At least part of the system may be permanently or semi-permanently deployed and/or at least part of the system may be temporarily deployed.

The signal may be ultrasonic. In some embodiments the signal may be a broadband impulse. In some embodiments the signal may be a swept signal.

The frequency spectrum of a signal may be tuned to emit a guided wave along the conduit which may help to increase the signal penetration along the conduit.

The source and/or the detector may be located at or towards the top of the conduit.

The source and/or detector provided on a delivery vehicle, for example a remote-controlled vehicle such as a ground, air or water borne craft.

The system may further comprise an alarm. For example the system may be configured to send a local and/or remote alarm signal if a trigger event occurs, for example if a fluid level rises above a threshold is detected or if movement within a conduit is detected.

In some embodiments the system can transmit a status signal, for example an alert or ok status signal to a control centre. Location data may be transmittal simultaneously or separately.

In some embodiments the system can transmit data, for example in a compressed, uncompressed or full precision format.

The system may further comprise a recorder for locally recording data. Alternatively or additionally data may be transmitted for recordal elsewhere.

The system may further comprise an analyser for locally analysing data. Alternatively or additionally data may be transmitted for analysis elsewhere.

Data may be analysed in real time. Alternatively or additionally data may be analysed subsequently.

The present invention may be used in conduits which are: completely or mainly filled with air; completely or mainly filled with liquid; or filled with a mix of air and liquid.

The present invention also provides a sewer monitoring and/or surveying system consisting of, comprising or including a system as described herein.

The present invention also provides a conduit investigation system for identifying the potential presence of clandestine munitions, consisting of, comprising or including a system as described herein.

According to a further aspect there is provided a method of monitoring and/or surveying a conduit, comprising the steps of: providing an acoustic source for emitting a signal to propagate along a conduit; and providing an acoustic detector for receiving the signals.

The method may further comprise the steps of: surveying a conduit to provide a clear response; surveying the conduit to provide a new response; and comparing the new response to the clear response. Deviation from the clear response may be an indication of a change within the conduit which requires further investigation or remedial action.

The methods described herein are a means of surveying conduits, for example to detect and locate partial or total blockages. The same means may be used to continually or frequently monitor the state of the conduits.

Further embodiments are disclosed in the dependent claims attached hereto.

Different aspects and embodiments of the invention may be used separately or together.

Further particular and preferred aspects of the present invention are set out in the accompanying independent and dependent claims.

Features of the dependent claims may be combined with the features of the independent claims as appropriate, and in combination other than those explicitly set out in the claims.

The present invention will now be more particularly described, with reference to the accompanying drawings, in which:
Figure 1 is a schematic showing acoustic surveying of a conduit, where the acoustic source and receiver are co-located;
Figure 2 is a schematic showing acoustic surveying of a conduit, where the acoustic source emits a signal that is recorded by an array of acoustic receivers;
Figure 3 illustrates the determination of fluid level in a conduit by measuring the time delay of the acoustic reflection from the top of the fluid layer.
Figure 4 a microphone set-up in which microphones are placed about I5cm from the grill that sealed the entrance to a culvert;
Figure 5 shows acoustic traces for no IED in the culvert (green) and with an IED placed in the culvert (blue);
Figure 6 is a blow-up of the time range where the reflection from the IED can be seen on the blue trace;
Figure 7 is an amplitude spectra of the traces recorded without the IED (green) and with the IED (blue) placed in the culvert;
Figure 8 illustrates repeatability of acoustic traces where no IED was present in the culvert;
Figure 9 is a blow-up of the traces where no IED was present in the culvert, around the arrival time of the reflection expected where an IED was present during the previous test;
Figure 10 is an amplitude spectra for the repeated shots where no IED was present in the culvert;
Figure 11 illustrates repeated shots for the configuration with an IED placed approximately mid-way within the culvert;
Figure 12 is a blow-up of the repeated shots with an IED placed mid-way within the culvert; and
Figure 13 is an amplitude spectra from the repeated shots where an IED was placed mid-way within the culvert.

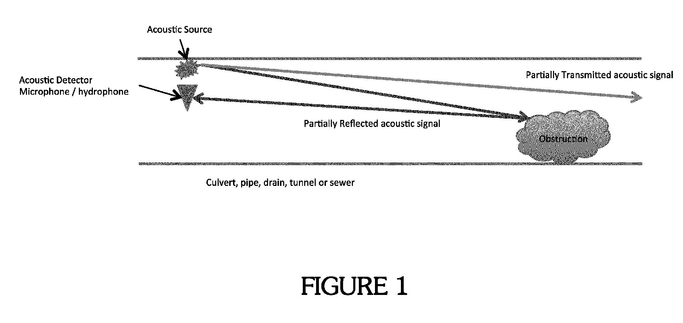

In Figure 1 an acoustic source emits a signal that propagates down the conduit. A partial or total blockage within the conduit will either partially or totally reflect the acoustic energy back down the conduit, where it will be detected using microphones (for measuring acoustic energy in air) or hydrophones (used for measuring acoustic energy in water).

The listening devices could be co-located with the acoustic source, or they could be distributed along the length of the conduit. If the acoustic source and the listening devices are co-located, the time delay between the emission of the acoustic signal and the recording of the reflected signal is the time taken to travel from the acoustic source to the partial or total blockage and then for the reflection to travel back to the receiver. The time delay between acoustic emission and reflection will enable the distance to the partial or total blockage to be estimated assuming the speed of sound in air to be 330 - 340 m/s. If the measurements are made in liquid, the speed of sound in water (1480 m/s) can be used to determine the distance to the partial or total blockage.

Alternatively, an array of acoustic detectors can be deployed along the length of the conduit. The transmission and partial or total acoustic reflection will be recorded by each sensor and the data from the array used to locate the partial or total blockage.

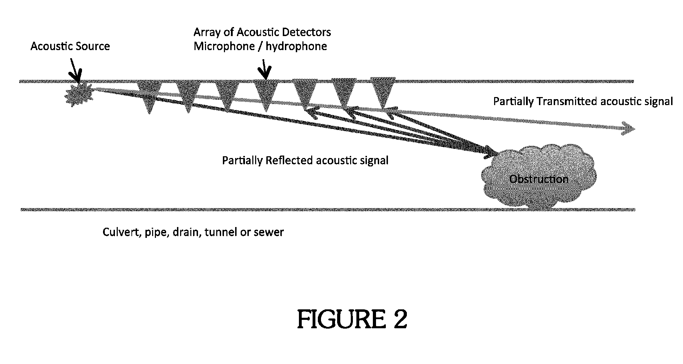

Referring to Figure 2, if acoustic detectors are located on the far side of the partial obstruction, then they will record the partially transmitted signal that has bypassed the obstruction. The reduction in amplitude of the recorded acoustic signal can be used to provide further information on the occurrence of the blockage.

A configuration similar to that described in Figure 2 can be formed where an array of acoustic sources could be deployed instead of an array of acoustic receivers - the nature of acoustic wave propagation being largely reciprocal.

The acoustic signal could be either a broadband impulse or could be a swept signal. The frequency spectrum of the acoustic signal could be tuned to emit a guided wave along the conduit; greatly increasing the range that can be tested by the method. The frequency range of the acoustic signal can be chosen to avoid the predominantly low frequency acoustic ambient signals from, say, vehicles. Tuning the acoustic signal to be ultra-sonic, to have a lowest frequency of around say 20,000 Hz would place the signal above the normal human hearing threshold and avoid disturbance of those living nearby to the conduit being surveyed or monitored. The swept signal mentioned above would also reduce the peak amplitude of the emitted signal and reduce the risk of disturbance.

If the acoustic source and receiver are co-located at the top of the conduit, the reflection from the top of the fluid layer that is flowing in the pipe can be used to determine how full the conduit is.

In the case of culvert surveying, the acoustic source and receiver can be located outside of the culvert, but close to its entrance. Again, the detection of the partial or total reflection from a blockage and the measurement of the residual transmitted acoustic energy on the far side of the culvert from the acoustic source would be indicative of a suspicious object that may be an improvised explosive device.

In all of the applications, the system could be deployed to do either a specific survey or investigation. Alternatively, the system could be deployed permanently as a network and would provide continuous monitoring of the state of the conduit under investigation. The data recorded by the system could be transmitted back to base for further investigation, or alarms transmitted if problems with the conduit are indicated if the data are analysed locally.

The temporarily or permanently deployed acoustic detector system could also record the ambient noise within the culvert, pipe, drain, tunnel or sewer. These generally low frequency signals would provide continuous information about the status of the system being monitored. Sudden collapses of the infrastructure would be located from the acoustic signal emitted by the occurrence.

The temporarily or permanently deployed acoustic system would also have security applications whereby noise associated with, for example, removal of manhole covers, passage of vehicles or people within the conduit, and other noise sources associated with either security breaches or intrusion would be monitored and recorded, including conversations between intruders.

The system can be augmented by other measurements, such as the detection of volatile organic compounds such as methane that may build up as a result of a partial or total blockage. Volatile organic compound detectors may also indicate the presence of certain explosives in the case where improvised explosive devices are sought.

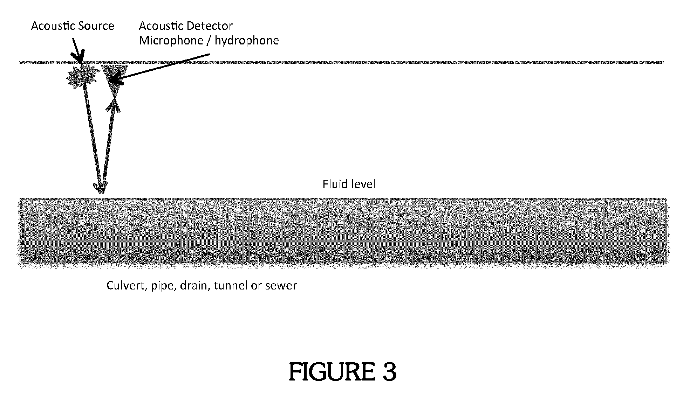

In Figure 3 the fluid level in a conduit is determined by measuring the time delay of the acoustic reflection from the top of the fluid layer;

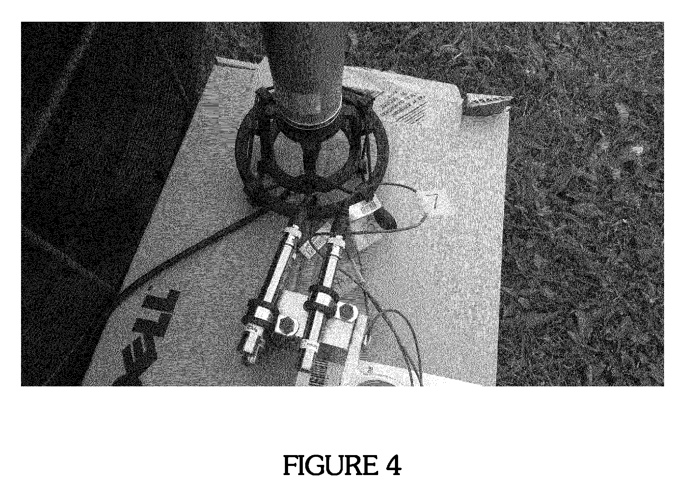

In Figure 4 an experiment was completed that demonstrates the principal acoustic process outlined above and provides an example of improvised explosive device detection in a culvert.

A 3m long plastic culvert was deployed with metal grills fixed across each end. Microphones were located close to the grill at one end of the culvert. A starting pistol was used as a high frequency impulsive acoustic source. The starting pistol was fired next to the microphones, but within the microphones' null sensitivity zone.

All of the data presented in this example were detected using the microphone. The empty culvert was first surveyed and the culvert was surveyed again after the inclusion of fake IEDs (a small rucksack) placed at different distances from the microphones within the culvert. The fake IEDs presented a partial blockage to the culvert. Some of the acoustic energy from the starting pistol would be reflected back to the microphone, while the remainder of the acoustic energy would be transmitted through the culvert. The distance from the microphone to the IED can be calculated by finding the time delay between the acoustic source being fired and the arrival of the reflection from the IED back at the microphone. The two-way propagation time for this reflection was multiplied by the speed of sound in air (330m/s) and halved, to find the distance from the microphone and the IED.

The repeatability of shots was also tested and the wiggle plots and amplitude spectra presented for analysis.

### Results

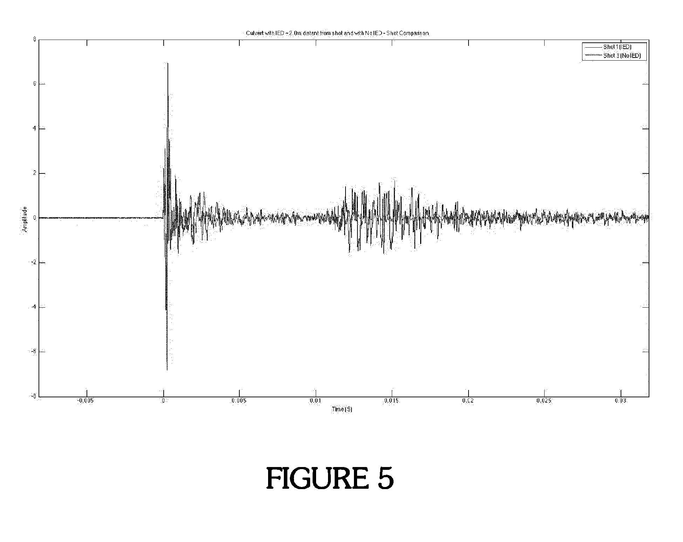

Figure 5 shows the acoustic trace for the culvert with no IED in green and the acoustic trace for the culvert with an IED partially blocking the culvert in blue.

The large signal seen at time 0.0s corresponds to the firing of the starting pistol next to the microphone and represents the propagation start time t₀ from which reflection delays can be measured. A high amplitude reflection signal from the IED is clearly seen on the blue trace.

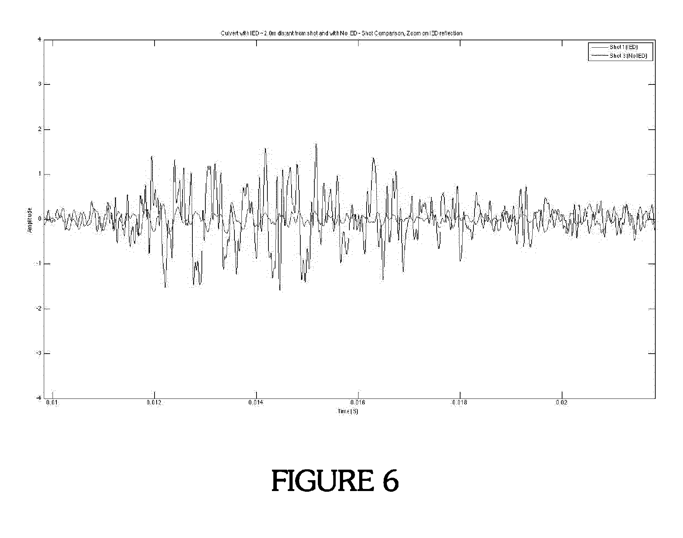

Figure 6 shows a blow-up of the traces around the arrival of the reflection from the IED. The IED reflection arrives at the microphone at 0.01045s, which corresponds to a two way propagation distance of 3.44m (assuming a propagation velocity of sound in air of 330m/s). The 0.15m distance of the source and microphone from the grill covering the entrance to the culvert means that the IED was placed 1.57m from the entrance to the culvert; this corresponds to the placing of the IED in the middle of the culvert for this test.

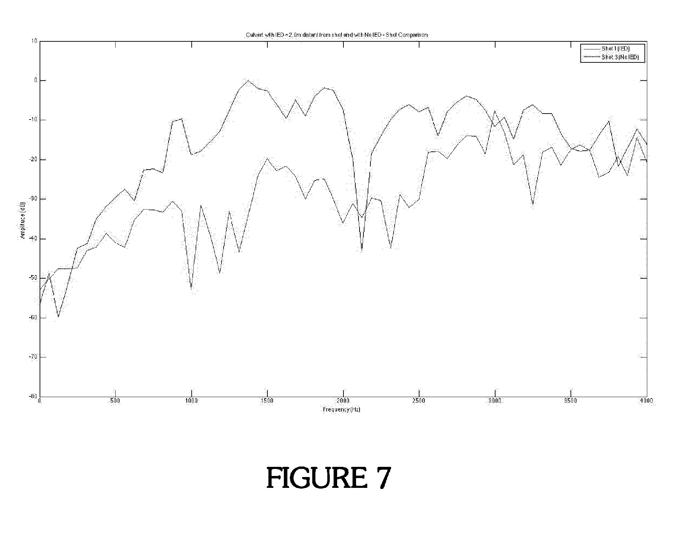

Figure 7 shows the amplitude spectra for the traces recorded without the IED (green) and with the IED (blue) placed inside the culvert. The additional energy seen on the traces with the IED reflection is shown clearly by the more energetic spectral response and is typically 20 - 30dB higher across the frequency range of interest.

Repeatability was tested by recording two shots for each configuration: with and without the IED being present.

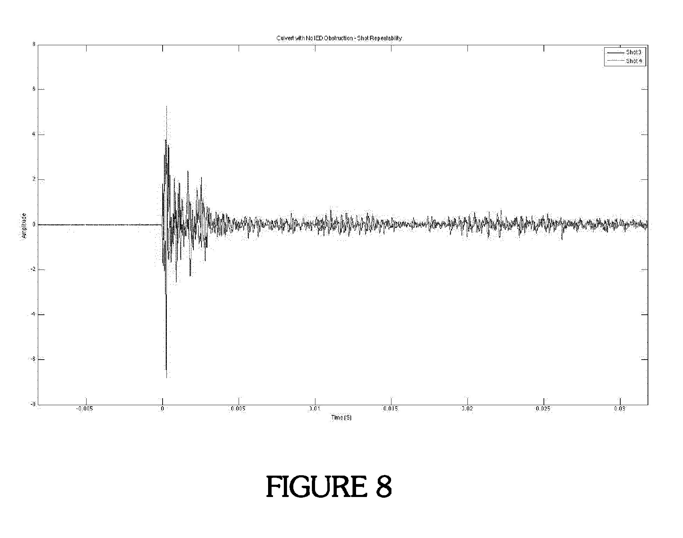

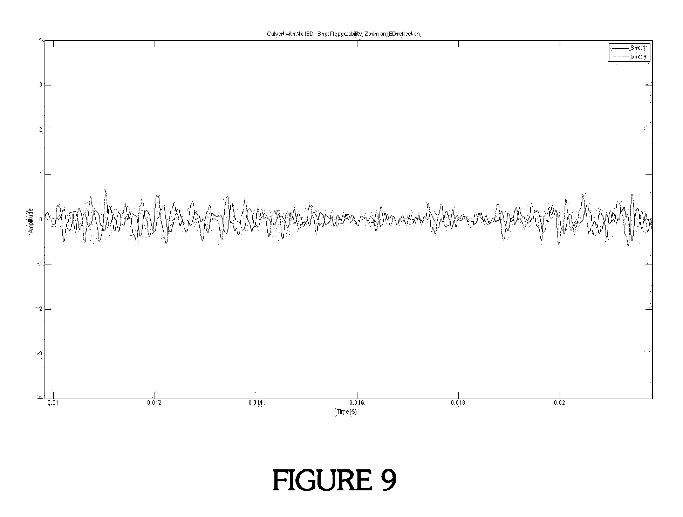

Figures 8 and 9 show two traces recorded where no IED was present in the culvert. The traces are highly repeatable, notwithstanding the variation of the acoustic shots from the caps fired by the starting pistol.

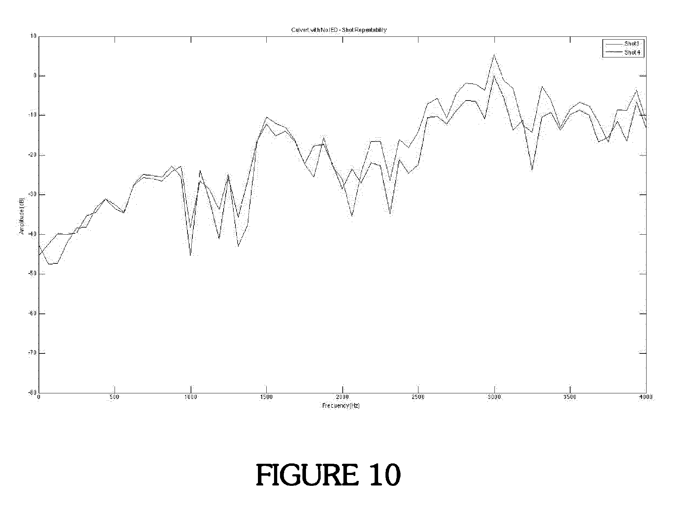

Figure 10 shows the amplitude spectra for the repeated shots with no IED present in the culvert.

The repeatability of the amplitude spectra is very high and is typically less than 5 dB across the frequency range dominated by the acoustic source.

Similarly, two shots were recorded for the configuration where the IED was located mid-way within the culvert (around 1.5m from the entrance to the culvert where the microphones were placed).

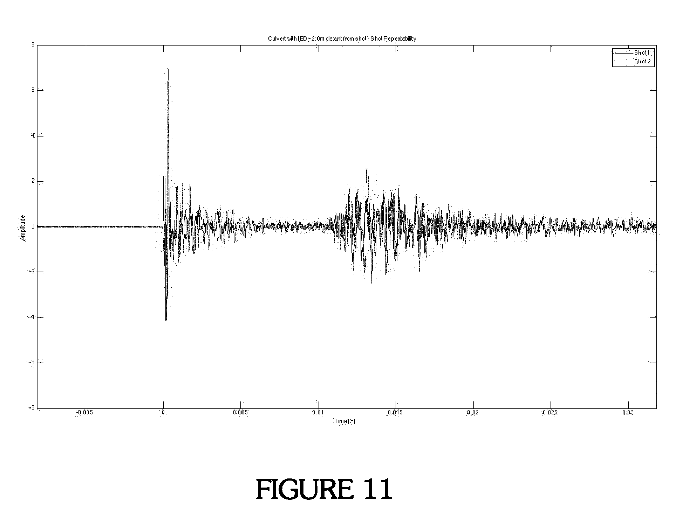

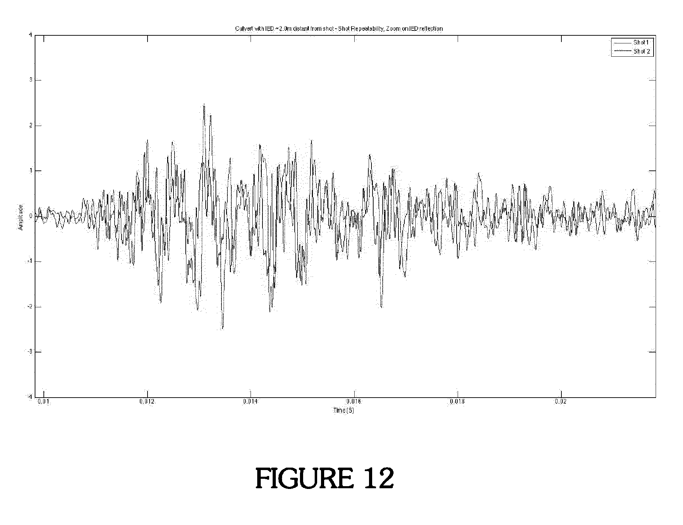

The traces from the repeated shots are shown on Figures 11 and 12.

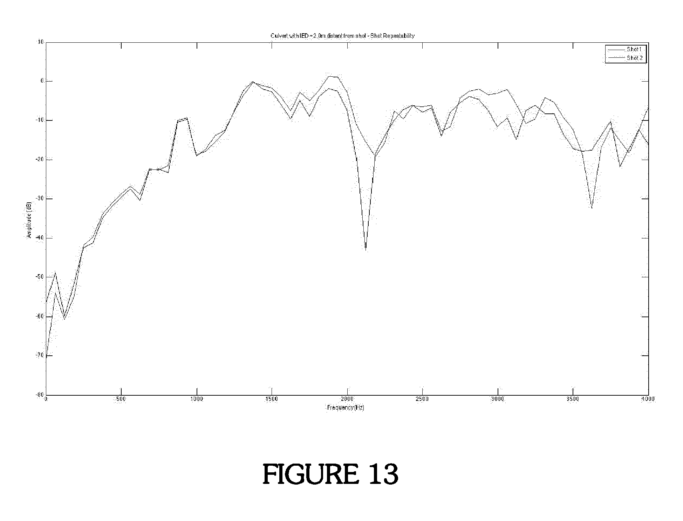

Figure 13 shows the amplitude spectra from the repeated shots where an IED was placed mid-way along the length of the culvert. The traces in Figures 8 and 9 show high repeatability of the IED reflection response. The amplitude spectra are highly repeatable, with typically less than 2dB variation across the frequency range of interest.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. A system for monitoring and/or surveying a conduit, comprising an acoustic source for emitting a signal to propagate along the conduit, and an acoustic detector for receiving reflected signals.

2. A systems as claimed in claim 1, in which there are a plurality of sources and/or a plurality of detectors.

3. A system as claimed in claim 1 or claim 2, in which the or at least one of the detectors is: a microphone; a hydrophone; an accelerometer; a vibration sensor.

4. A system as claimed in any preceding claim and further comprising a chemical detector.

5. A system as claimed in any preceding claim, in which the source and the detector are co-located.

6. A system as claimed in any preceding claim, in which at least part of the system is: permanently deployed; semi-permanently deployed; temporarily deployed.

7. A system as claimed in any preceding claim, in which the signal is: ultrasonic; a broadband impulse; a swept signal.

8. A system as claimed in any preceding claim, in which the frequency spectrum of the signal is tuned to emit a guided wave along the conduit.

9. A system as claimed in any preceding claim, in which the source and/or the detector are located at or towards the top of the conduit.

10. A system as claimed in any preceding claim, in which the source and/or detector is provided on a delivery vehicle.

11. A system as claimed in any preceding claim and further comprising an alarm.

12. A system as claimed in any preceding claim, in which the system can transmit a status signal and/or can transmit data.

13. A system as claimed in claim 12, in which data is transmitted: in a compressed format; in a full precision format.

14. A system as claimed in any preceding claim, further comprising: a recorder for locally recording data and/or an analyser for locally analysing data

15. A system as claimed in claim 14, in which the data is analysed in real time.

16. A method of monitoring and/or surveying a conduit, comprising the steps of:
- providing an acoustic source for emitting a signal to propagate along a conduit; and
- providing an acoustic detector for receiving the signals.
